# EUROPEAN PATENT SPECIFICATION

(11) **EP 3 135 525 B1**
(45) Date of publication and mention of the grant of the patent: **14.08.2019**
(21) Application number: 16184779.3
(22) Date of filing: 18.08.2016
(51) Int. Cl.: B60K 20/04

(54) **WORKING VEHICLE**
NUTZFAHRZEUG
VÉHICULE DE TRAVAIL

(30) Priority: 27.08.2015 JP 2015168012
(43) Date of publication of application: 01.03.2017
(73) Proprietor: Iseki & Co., Ltd., Matsuyama-shi, Ehime 799-2692 (JP)
(72) Inventor: TOMIOKA, Eiji, Iyo-gun, Ehime (JP)
(74) Representative: Spengler, Robert

(56) References cited:
- US-A- 4 850 238
- US-A1- 2006 081 084
- US-A1- 2012 024 100
- US-A1- 2014 287 871

## Description

### BACKGROUND OF THE INVENTION

### Field of the Invention

The present invention relates to a working vehicle such as a tractor or the like.

Document US 2006/0081084 A1, which comprises the features mentioned in the preamble of claim 1, discloses a working vehicle with a speed maintaining apparatus, comprising: a plurality of wheels including at least one driven wheel; a vehicle body supported by the plurality of wheels; an engine supported by the vehicle body; a stepless transmission driven by the engine and capable of changing speed of power to the driven wheel; a neutral return device for biasing the stepless transmission toward a neutral position; a change speed pedal operatively connected to the stepless transmission; a speed maintaining device for maintaining the stepless transmission in a desired speed position; a speed setting lever movable to a retreat position and to positions in a forward speed range for setting the stepless transmission to the desired speed position in which the stepless transmission is maintained by the speed maintaining device; a relay rocking element connected to the stepless transmission through an auxiliary rocking element pivotable relative to the relay rocking element; and a control member provided in the speed maintaining device to be movable with the speed setting lever. The control member contacts and retain the auxiliary rocking element in response to a movement of the speed setting lever from the retreat position to a position in the forward speed range, thereby restricting movement of the auxiliary rocking element relative to the relay rocking element, and allowing displacement of the relay rocking element by an amount corresponding to an amount of operation of the speed setting lever in the forward speed range, and thereby allowing the stepless transmission to be operated to the desired speed position.

Document US 2012/0024100 A1 discloses a speed change operation apparatus including a pivotal body operatively connected to a trunnion shaft to be pivotally displaced in response to an operational displacement by an operational tool, a positioning body operatively coupled with the pivotal body so as to be pivotally displaced in response to a pivotal displacement of the pivotal body, a main urging mechanism for applying an urging force to the pivotal body via the positioning body for returning the pivotal body from an operational position to the neutral position, and an auxiliary urging mechanism for applying an auxiliary urging force to the pivotal body for returning the pivotal body from the operational position to the neutral position. The returning urging force by the main urging mechanism when the trunnion shaft is located at the neutral position is stronger than the returning urging force by the main urging mechanism when the trunnion shaft is located at the operational position. And, the auxiliary urging force by the auxiliary urging mechanism when the trunnion shaft is located at the neutral position is weaker than the auxiliary urging force by the auxiliary urging mechanism when the trunnion shaft is located at the operational position.

Known is a working vehicle, comprising: an HST (Hydro Static Transmission) which has an HST trunnion shaft; an HST link mechanism which connects an HST pedal to the HST trunnion shaft; an HST neutrality-returning cam fixed to the HST trunnion shaft; an HST neutrality-returning arm member which interlocks with the HST neutrality-returning cam, and rotates around a rotation fulcrum shaft; and an HST neutrality-returning spring which energizes the HST neutrality-returning arm member, so that the HST trunnion shaft returns to the neutrality position (for example, refer to Japanese Patent Application Publication No. 2005-233260).

In a working vehicle like this, when a stepping-on operation of the HST pedal is not performed, the spring returning-force of the HST neutrality-returning spring has an influence, and the neutrality posture of the HST trunnion shaft is automatically restored.

### SUMMARY OF THE INVENTION

However, in the above described conventional working vehicle, effective utilization of the vehicle inner part space is not sufficiently realized.

And, the present inventor conceives that it is important to realize more effective utilization of the vehicle inner part space.

An object of the present invention is, in consideration of the above described conventional problem, to furnish a working vehicle for which more effective utilization of the vehicle inner part space is able to be realized.

The 1^{st} aspect of the present invention is a working vehicle, comprising:
a vehicle body (5);
a driving part (30);
a hydrostatic transmission (11) which has a hydrostatic transmission trunnion shaft (12);
a hydrostatic transmission link mechanism (70) which connects a hydrostatic transmission pedal (60) to the hydrostatic transmission trunnion shaft (12);
a hydrostatic transmission neutrality-returning cam (110) fixed to the hydrostatic transmission trunnion shaft (12);
a hydrostatic transmission neutrality-returning arm member (120) which interlocks with the hydrostatic transmission neutrality-returning cam (110), and rotates around a rotation fulcrum shaft (121); and
a hydrostatic transmission neutrality-returning spring (130) which energizes the hydrostatic transmission neutrality-returning arm member (120), so that the hydrostatic transmission trunnion shaft (12) returns to a neutrality position,
**characterized in that**
the hydrostatic transmission trunnion shaft (12), and the rotation fulcrum shaft (121) are arranged immediately under the hydrostatic transmission pedal (60),
the hydrostatic transmission neutrality-returning arm member (120) has a spring joining arm (122) to which the hydrostatic transmission neutrality-returning spring (130) is joined, and a bearing joining arm (123) protrudingly provided to which a cam abutting bearing (140), which is made to abut against the hydrostatic transmission neutrality-returning, cam (110), is fixed,
the spring joining arm (122), a lower-end part of which is joined to the rotation fulcrum shaft (121), is upwardly provided, so that an upper-end part of the spring joining arm (122) is positioned above a floor (40) of the driving part (30), and
the hydrostatic transmission neutrality-returing spring (13.0) is arranged above the floor (40) of the driving part (30), so that a front-end part of the hydrostatic transmission neutrality-returning spring (130) is joined to a stay attached to the vehicle-body (5) and that a rear-end part of the hydrostatic transmission neutrality-returning spring (130) is joined to the upper-end part of the spring joining arm (122).

By means of this, since the HST trunnion shaft (12), and the rotation fulcrum shaft (121) are arranged immediately under the IIST pedal (60), more effective utilization of the vehicle inner part space can be realized. Furthermore, since the HST neutrality-returning spring (130) is arranged above the floor (40) of the driving part (30), an easy adjustment operation of the HST neutrality-returning spring (130) can be realized. The 2^{nd} aspect of the present invention is the working vehicle according to the 1^{st} aspect of the present invention, comprising a supporting part (21) which supports in common the hydrostatic transmission trunnion shaft (12), and the rotation fulcrum shaft (121), wherein
the supporting part (21) is a plate-shaped member which is a single member, and is joined to an outer wall of a transmission case (20).

By means of this, since comprising the supporting part (21) which supports in common the HST trunnion shaft (12), and the rotation fulcrum shaft (121), cost reduction can be realized. Furthermore, since the supporting part (21) is a plate-shaped member which is a single member, and is joined to the outer wall of the transmission case (20), further cost reduction can be realized.

The 3^{rd} aspect of the present invention is the working vehicle according to the 1^{st} or 2^{nd} aspect of the present invention, wherein
the hydrostatic transmission neutrality-returning cam (110), and the cam abutting bearing (140) are, compared with the hydrostatic transmission neutrality-returning arm member (120), arranged near to a center of the vehicle-body (5) with respect to a left-and-right direction.

By means of this, since the HST neutrality-returning cam (110), and the cam abutting bearing (1.40) are, compared with the HST neutrality-returning arm member (120), arranged near to the center of the vehicle-body (5) with respect to the left-and-right direction, life-prolongation off the HST neutrality-returning cam (110), and the cam abutting bearing (140) can be realized.

The 4^{th} aspect of the present invention is the working vehicle according to the 1^{st} or 2^{nd} aspect of the present invention, wherein
the hydrostatic transmission link mechanism (70) has plural link arms (71a, 71b, 71c), a link arm pin (72a, 72b) which joins the plural link arms (71a, 71b, 71c), and a lock-hairpin (73a, 73b) which prevents coming-off of the link arm pin (72a, 72b), and
the Jock-hairpin (73a, 73 b) is, compared with the plural link arms (71a, 71b, 71c), arranged near to a center of the vehicle-body (5) with respect to a left-and-right direction.

By means of this, since the lock-hairpin (73a, 73b) is, compared with the plural link arms (71a, 71b, 71c), arranged near to the center of the vehicle-body (5) with respect to the left-and-right direction, life-prolongation of the lock-hairpin (73a, 73b) can be realized.

The 5^{th} aspect of the present invention is the working vehicle according to any one of the 1^{st} to 4^{th} aspects of the present invention, wherein the rotation fulcrum shaft (121) is arranged immediately behind a pedal arm of a brake pedal (50).

By means of this, since the rotation fulcrum shaft (121) is arranged immediately behind the pedal arm of the brake pedal (50), further more effective utilization of the vehicle inner part space can be realized.

By the present invention, a working vehicle for which more effective utilization of the vehicle inner part space is able to be realized can be furnished.

### BRIEF DESCRIPTION OF THE DRAWINGS

FIG. 1 is a top view of the tractor of the embodiment in the present invention;
FIG. 2 is a partial right side view (No. 1) of the neighborhood of the transmission case of the tractor of the embodiment in the present invention:
   FIG. 3 is a partial top view of the neighborhood of the HST pedal of the tractor of the embodiment in the present invention;
   FIG. 4 is an enlarged partial top view of the neighborhood of the HST link mechanism of the tractor of the embodiment in the present invention;
   FIG. 5A is a schematic partial right side view (No. 1) of the neighborhood of the HST trunnion shaft of the tractor of the embodiment in the present invention, and
   FIG. 5B is a schematic partial right side view (No. 2) of the neighborhood of the IIST trunnion shaft of the tractor of the embodiment in the present invention;
   FIG. 6 is a partial right side view (No. 2) of the neighborhood of the transmission case of the tractor of the embodiment in the present invention;
   FIG. 7 is an enlarged partial right side view of the neighborhood of the HST neutrality-returning mechanism of the tractor of the embodiment in the present invention; and
   FIG. 8 is a partial perspective view of the neighborhood of the transmission ease of the tractor of the embodiment in the present invention.

### Description of the Reference Numerals

- 1: bonnet
- 2: engine
- 3L, 3R: front wheel
- 4L, 4R: rear wheel
- 5: vehicle-body
- 11: HST
- 12: HST trunnion shaft
- 12a: end part
- 20: transmission case
- 21: supporting part
- 30: driving part
- 31: driving seat
- 32: steering handle
- 40: floor
- 40a: floor reinforcement part
- 40b: damper attachment hole
- 41: floor bracket
- 42: cushion
- 50: brake pedal
- 60: HST pedal
- 60a, 60b: bolt
- 61: pedal base part
- 62: pedal stepping-on part
- 63a, 63b: pedal stopper bolt
- 70: HST link mechanism
- 71a, 71b, 71c: link arm
- 72a, 72b: link arm pin
- 73a, 73b: lock-hairpin
- 74a, 74b: washer
- 80: HST pedal rotation shaft
- 80a: end part
- 90: damper
- 100: HST neutrality-returning mechanism
- 110: HST neutrality-returning cam
- 120: HST neutrality-returning arm member
- 121: rotation fulcrum shaft
- 121a: spanner engagement part
- 121b: grease nipple
- 121c: eccentric fulcrum shaft
- 122: spring joining arm
- 123: bearing joining arm
- 130: HST neutrality-returning spring
- 140: cam abutting bearing

### DESCRIPTION OF THE EMBODIMENTS

In the following, referring to the drawings, descriptions are given in detail regarding embodiments in the present invention.

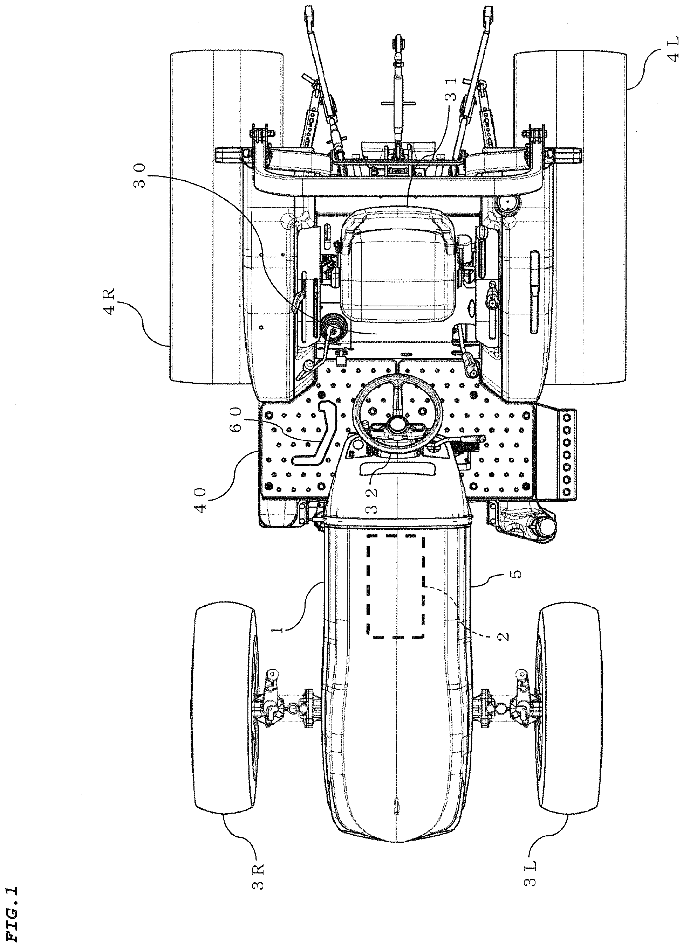

In the beginning, referring to FIGs. 1 to 3, descriptions are specifically given regarding the configuration and action of a tractor of the present embodiment which is an example of the working vehicle.

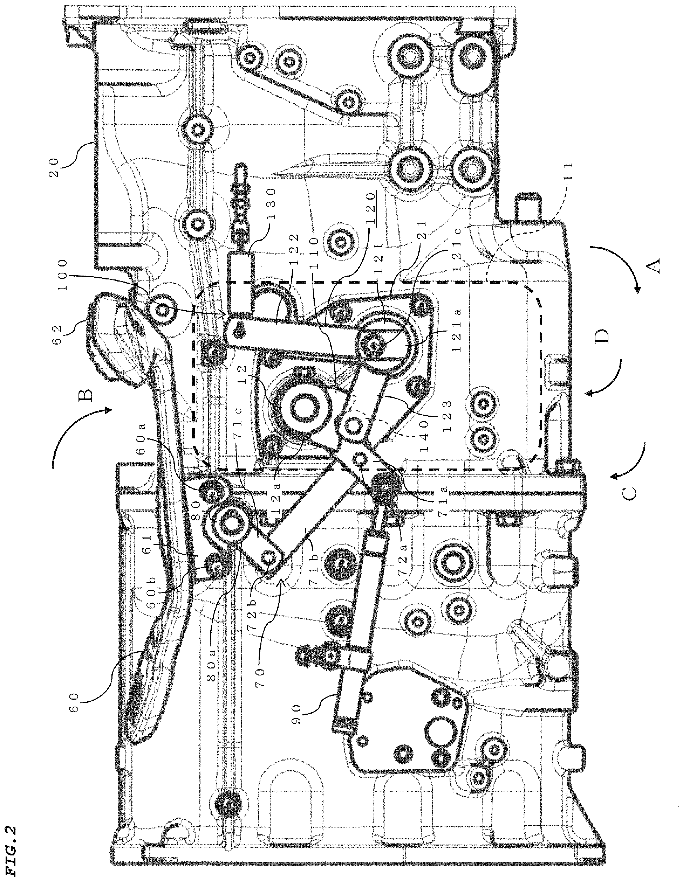

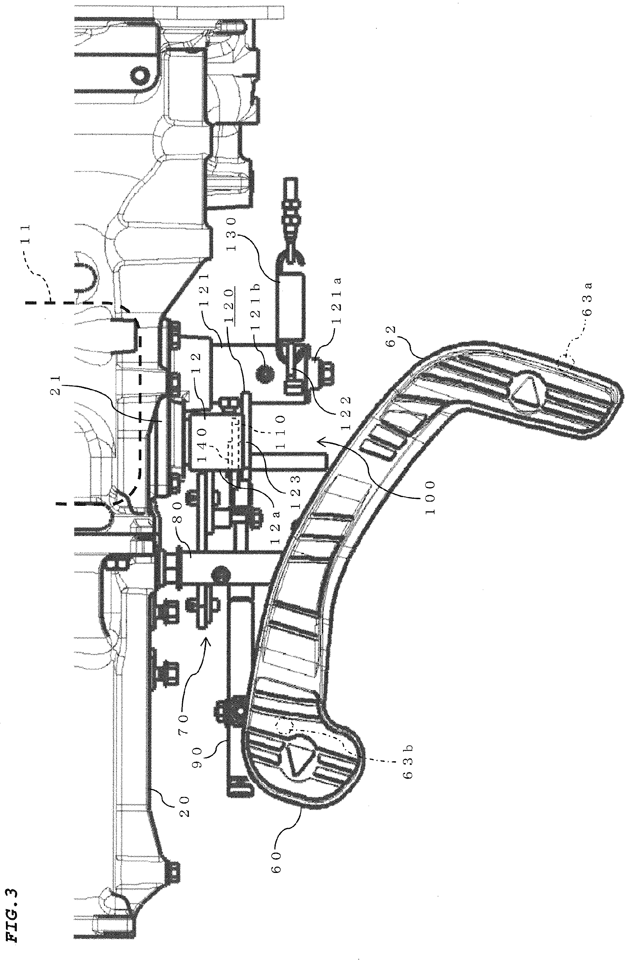

Here, FIG. 1 is a top view of the tractor of the embodiment in the present invention, FIG. 2 is a partial right side view (No. 1) of the neighborhood of a transmission case 20 of the tractor of the embodiment in the present invention, and FIG. 3 is a partial top view of the neighborhood of an HST pedal 60 of the tractor of the embodiment in the present invention.

In FIGs. 2 and 3, for example, a floor 40 and the like are not shown, so that descriptions in the following will become easier to understand.

In the inner part of a bonnet 1 of the front part of a vehicle-body 5, an engine 2 is provided.

The transmission case 20 is provided below the floor 40 of a driving part 30.

Rotary motive force of the engine 2 is transmitted via an HST 11 to a speed-changing device of the inner part of the transmission case 20. And, the rotary motive force with speed-decreasing having been carried out at the relevant speed-changing device is transmitted to left and right front wheels 3L and 3R, and left and right rear wheels 4L and 4R.

Behind the engine 2, a steering handle 32 for carrying out steerage with the front wheels 3L and 3R is provided.

Behind the steering handle 32, a driving seat 31 is provided.

At the rear part of the vehicle-body 5, a working implement (not shown) such as a rotary tilling device or the like is installed utilizing a mechanism such as a 3-point link mechanism or the like.

A hose cover covers hoses joined to the steering handle 32.

On the floor 40 at the right side of an operation column cover, a brake pedal 50 for performing braking with the rear wheels 4L and 4R in correspondence to a stepping-on operation of a worker is arranged.

On the floor 40 at the right side of the operation column cover, the HST pedal 60 is arranged.

The HST pedal 60 is a pedal which operates the HST 11 arranged in the inner part of the transmission case 20.

As will be described in detail later, modulation of the HST trunnion opening-degree of the HST 11 is performed in correspondence to a stepping-on operation of the seesaw-type HST pedal 60, and continuously-variable speed-changing corresponding to frontward movement speed-increasing, neutrality and rearward movement speed-increasing is realized.

Of course, when a stepping-on operation of the HST pedal 60 is not performed, the spring returning-force of an HST neutrality-returning spring 130 has an influence, and the neutrality posture of an HST trunnion shaft 12 is automatically restored.

Next, mainly referring to FIGs. 1 to 3, descriptions are more specifically given regarding the configuration and action of the tractor of the present embodiment.
(A) Mainly referring to FIGs. 2 and 3, descriptions are given in detail regarding the configuration and action which are related to an HST link mechanism 70 and an HST neutrality-returning mechanism 100.
(A1) In the first place, descriptions are given in detail regarding the HST link mechanism 70, but descriptions are given in detail also regarding the HST 11 and the HST pedal 60 as well.

The HST 11 has the HST trunnion shaft 12.

As will be described in detail later, the HST trunnion shaft 12 is arranged immediately under the HST pedal 60, and is supported by a supporting part 21.

The HST link mechanism 70 is a mechanism which connects the HST pedal 60 to the HST trunnion shaft 12.

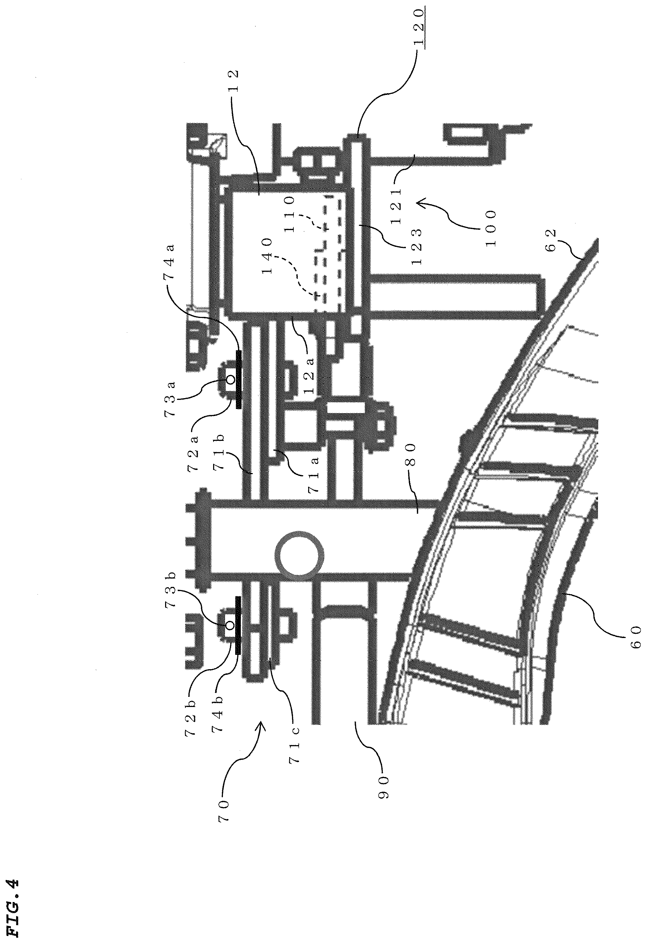

As is indicated in FIG. 4 which is an enlarged partial top view of the neighborhood of the HST link mechanism 70 of the tractor of the embodiment in the present invention, the HST link mechanism 70 has link arms 71a, 71b and 71c, link arm pins 72a and 72b which join the link arms 71a, 71b and 71c, and lock-hairpins 73a and 73b which prevent coming-off of the link arm pins 72a and 72b.

The lock-hairpins 73a and 73b are, compared with the link arms 71a, 71b and 71c, arranged near to the center of the vehicle-body 5 with respect to the left-and-right direction.

Hence, since risks such as contact-damage, mud-adhesion and the like are reduced because of the guard function by the link arms 71a, 71b and 71c, life-prolongation of the lock-hairpins 73a and 73b is realized for which precision is required.

Next, descriptions are given in more detail regarding the HST link mechanism 70.

The one end part of the link arm 71a is joined to an end part 12a at the right side of the HST trunnion shaft 12. The joining between the link arm 71a and the end part 12a is fixedly performed.

The one end part of the link arm 71c is joined to an end part 80a at the right side of an HST pedal rotation shaft 80. The joining between the link arm 71c and the end part 80a is fixedly performed.

The link arm 71b joins the central part of the link arm 71a and the other end part of the link arm 71c. The joining between the link arm 71b and the link arm 71a is rotatably performed utilizing the link arm pin 72a and the lock-hairpin 73a, and the joining between the link arm 71b and the link arm 71c is rotatably performed utilizing the link arm pin 72b and the lock-hairpin 73b. In these joinings, the end parts of the link arm pins 72a and 72b at the outer side of the vehicle-body 5 with respect to the left-and-right direction are welded to the link arms 71a and 71c, respectively, and washers 74a and 74b which are, compared with the link arms 71a, 71b and 71c, fitted near to the center of the vehicle-body 5 with respect to the left-and-right direction are respectively utilized.

The HST pedal rotation shaft 80 is a shaft provided in the left-and-right direction of the transmission case 20, which rotates in correspondence to swinging of the HST pedal 60.

The joining between the end part 80a at the right side of the HST pedal rotation shaft 80 and a pedal base part 61 is fixedly performed.

A pedal stepping-on part 62 of the HST pedal 60, to which a stepping-on operation by the right foot of the worker is performed, is joined to the pedal base part 61. The joining between the pedal base part 61 and the pedal stepping-on part 62 is fixedly performed utilizing bolts 60a and 60b.

Hereupon, in the pedal stepping-on part 62, a round hole the bolt 60a penetrates and a long hole the bolt 60b penetrates are provided, and the attachment-angle of the pedal stepping-on part 62 to the pedal base part 61 is adjustable.

It is desirable that the posture of the variable pump swash-plate (not shown) of the HST 11 which is rotatable around the HST trunnion shaft 12 should, at the time when the posture of the pedal stepping-on part 62 is the horizontality posture, coincide with the neutrality posture for which the HST trunnion opening-degree is zero.

Accordingly, the connection state of the above described configuration elements is adjusted so that the horizontality posture of the pedal stepping-on part 62 is compatible with the neutrality posture of the variable pump swash-plate of the HST 11, that is to say the neutrality posture of the HST trunnion shaft 12.

When a stepping-on operation of the HST pedal 60 is performed in the frontward orientation which is the orientation indicated with an arrow B, the rotation of the HST trunnion shaft 12 is performed in the orientation indicated with an arrow A, and frontward movement speed-increasing is performed.

In contrast to the above-described, when a stepping-on operation of the HST pedal 60 is performed in the rearward orientation which is the orientation opposite to the orientation indicated with the arrow B, the rotation of the HST trunnion shaft 12 is performed in the orientation opposite to the orientation indicated with the arrow A, and rearward movement speed-increasing is performed.

Thus, continuously-variable speed-changing corresponding to frontward movement speed-increasing, neutrality and rearward movement speed-increasing, which is in correspondence to a stepping-on operation of the seesaw-type HST pedal 60, is realized.
(A2) In the second place, descriptions are given in detail regarding the HST neutrality-returning mechanism 100.

The HST neutrality-returning mechanism 100 has an HST neutrality-returning cam 110, an HST neutrality-returning arm member 120, the HST neutrality-returning spring 130, and a cam abutting bearing 140.

The HST neutrality-returning cam 110 is a cam fixed to the HST trunnion shaft 12.

The HST neutrality-returning arm member 120 is a member which interlocks with the HST neutrality-returning cam 110, and rotates around a rotation fulcrum shaft 121.

A grease nipple 121b is, so as to be upwardly opened, provided in the HST neutrality-returning arm member 120.

In the relevant configuration, a grease-up is easy, which is a replenishing/exchanging working of the grease which is injected so that the HST neutrality-returning arm member 120 smoothly rotates around the rotation fulcrum shaft 121.

As will be described in detail later, the rotation fulcrum shaft 121 is arranged immediately under the HST pedal 60, and is supported by the supporting part 21.

And, the rotation fulcrum shaft 121 is arranged immediately behind the pedal arm of the brake pedal 50.

In the relevant configuration, since the rotation fulcrum shaft 121 is arranged to come closer to the brake pedal 50 while avoiding pedal arm interference, more effective utilization of the vehicle inner part space and cost reduction are realized.

The HST neutrality-returning spring 130 is a spring which energizes the HST neutrality-returning arm member 120, so that the HST trunnion shaft 12 returns to the neutrality position.

The cam abutting bearing 140 is a bearing which is fixed to the HST neutrality-returning arm member 120, and is made to abut against the HST neutrality-returning cam 110.

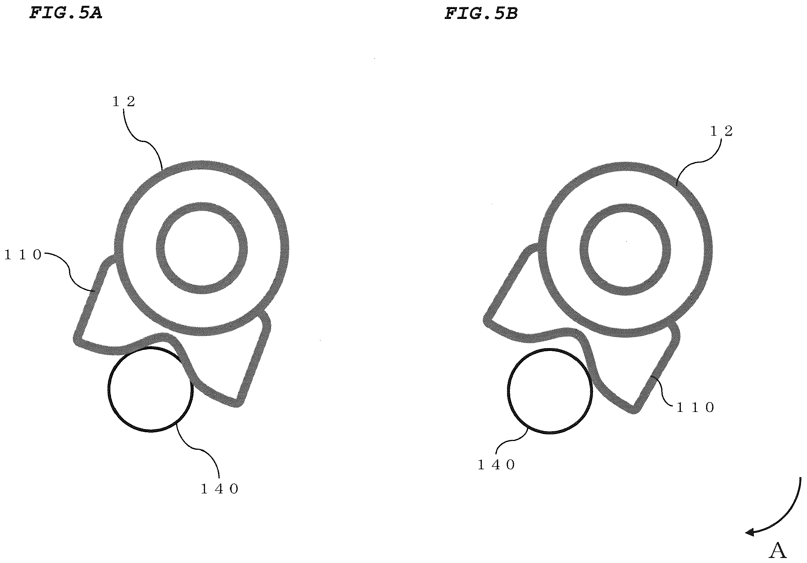

As is indicated in FIG. 5A which is a schematic partial right side view (No. 1) of the neighborhood of the HST trunnion shaft 12 of the tractor of the embodiment in the present invention, when a stepping-on operation of the HST pedal 60 is not performed, the cam abutting bearing 140 fits into the concave part of the HST neutrality-returning cam 110.

As is indicated in FIG. 5B which is a schematic partial right side view (No. 2) of the neighborhood of the HST trunnion shaft 12 of the tractor of the embodiment in the present invention, when a stepping-on operation of the HST pedal 60 is performed in the frontward orientation which is the orientation indicated with the arrow B, the rotation of the HST trunnion shaft 12 is performed in the orientation indicated with the arrow A, and the cam abutting bearing 140 is pushed out while contacting the concave part of the HST neutrality-returning cam 110.

The HST neutrality-returning cam 110, and the cam abutting bearing 140 are, compared with the HST neutrality-returning arm member 120, arranged near to the center of the vehicle-body 5 with respect to the left-and-right direction.

Hence, since risks such as contact-damage, mud-adhesion and the like are reduced because of the guard function by the HST neutrality-returning arm member 120, life-prolongation of the HST neutrality-returning cam 110, and the cam abutting bearing 140 is realized for which precision is required.

Next, descriptions are given in more detail regarding the HST neutrality-returning mechanism 100.

The HST neutrality-returning arm member 120 has a spring joining arm 122, and a bearing joining arm 123.

The spring joining arm 122 is an arm to which the HST neutrality-returning spring 130 is joined.

The spring joining arm 122, the lower-end part of which is joined to the rotation fulcrum shaft 121, is upwardly provided.

The front-end part of the HST neutrality-returning spring 130 is joined to a stay attached to the vehicle-body 5, and the rear-end part of the HST neutrality-returning spring 130 is joined to the spring joining arm 122.

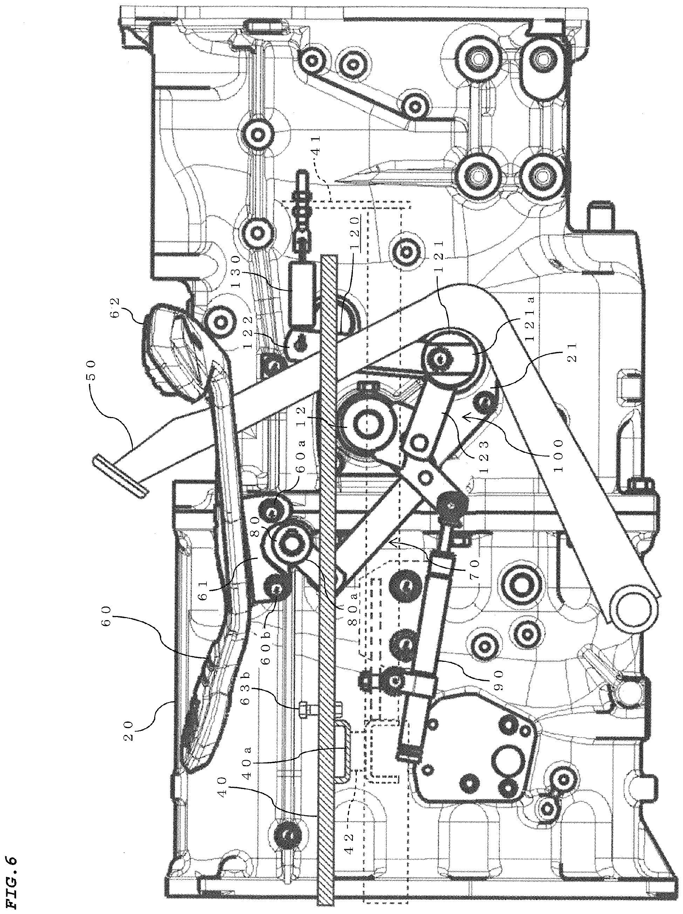

As is indicated in FIG. 6 which is a partial right side view (No. 2) of the neighborhood of the transmission case 20 of the tractor of the embodiment in the present invention, the HST neutrality-returning spring 130 is arranged above the floor 40 of the driving part 30.

And, the HST neutrality-returning spring 130 is provided at the front side of the floor 40 roughly at the floor step height.

Hence, since a sufficient vacant space is secured above the floor 40, an easy adjustment operation of the HST neutrality-returning spring 130 for applying the spring returning-force is realized.

The joining between the end part 12a at the right side of the HST trunnion shaft 12 and the HST neutrality-returning cam 110 is fixedly performed.

To the portion at the front side of the rotation fulcrum shaft 121, the spring joining arm 122 is protrudingly provided to which the HST neutrality-returning spring 130 is joined and, to the portion at the rear side of the rotation fulcrum shaft 121, the bearing joining arm 123 is protrudingly provided to which the cam abutting bearing 140 which is made to abut against the HST neutrality-returning cam 110 is fixed. And, the spring joining arm 122 and the bearing joining arm 123 are made to rotate together around the rotation fulcrum shaft 121.

The rotation fulcrum shaft 121 rotates accompanying the rotations of the spring joining arm 122 and the bearing joining arm 123. Additionally, a variant example is also conceived, where the rotation fulcrum shaft 121 does not rotate accompanying the rotations of the spring joining arm 122 and the bearing joining arm 123.

The HST neutrality-returning mechanism 100 also has the following function for adjusting, utilizing an eccentric fulcrum shaft 121c, the neutrality position of the cam abutting bearing 140 corresponding to the position where the HST neutrality-returning spring 130 stands still and the spring returning-force has no influence.

When an adjustment rotation operation of a spanner engagement part 121a by the worker is performed in the orientation indicated with an arrow C, the rotation fulcrum shaft 121 rotates around the eccentric fulcrum shaft 121c, the movement of the cam abutting bearing 140 is performed in the orientation indicated with an arrow D, and the rotation of the HST trunnion shaft 12 is performed in the orientation indicated with the arrow A.

An adjustment rotation operation like this is effective in a case where the neutrality posture of the HST trunnion shaft 12 has shifted to the rearward movement speed-increasing side.

In contrast to the above-described, when an adjustment rotation operation of the spanner engagement part 121a by the worker is performed in the orientation opposite to the orientation indicated with the arrow C, the rotation fulcrum shaft 121 rotates around the eccentric fulcrum shaft 121c, the movement of the cam abutting bearing 140 is performed in the orientation opposite to the orientation indicated with the arrow D, and the rotation of the HST trunnion shaft 12 is performed in the orientation opposite to the orientation indicated with the arrow A.

An adjustment rotation operation like this is effective in a case where the neutrality posture of the HST trunnion shaft 12 has shifted to the frontward movement speed-increasing side.

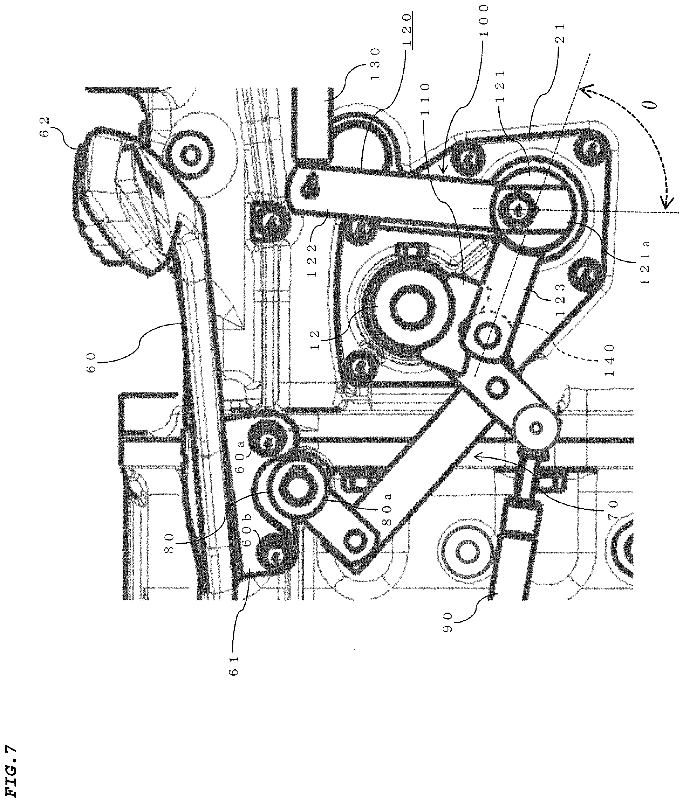

As is indicated in FIG. 7 which is an enlarged partial right side view of the neighborhood of the HST neutrality-returning mechanism 100 of the tractor of the embodiment in the present invention, the angle θ between the longitudinal direction of the spanner engagement part 121a with which a spanner is engaged, and the longitudinal direction of the bearing joining arm 123 which goes toward the cam abutting bearing 140 changes accompanying the above described adjustment rotation operation.

The fundamental largeness of the angle θ is set to 90 degrees, so that the worker can intuitively understand the fundamental neutrality position of the cam abutting bearing 140 and perform the adjustment rotation operation.

In the relevant configuration, an adjustment rotation operation for adjusting the left-and-right and up-and-down directions of the cam abutting bearing 140 with a spanner is easy also for an unexperienced worker.

Since shifting of the neutrality posture of the HST trunnion shaft 12 does not frequently occur, a function like this is usually used at the time of building in a factory, or at the time of assembling after dismantling in maintenance after shipping.

It is desirable that, after an adjustment rotation operation of the spanner engagement part 121a by the worker is completed, the attachment-angle of the pedal stepping-on part 62 to the pedal base part 61 should be adjusted so that the horizontality posture of the pedal stepping-on part 62 is compatible with the neutrality posture of the HST trunnion shaft 12.
(A3) As has been described above, the HST trunnion shaft 12, and the rotation fulcrum shaft 121 are arranged immediately under the HST pedal 60.

And, the height of the HST trunnion shaft 12 is larger than the height of the rotation fulcrum shaft 121, and the HST trunnion shaft 12 is arranged obliquely above the rotation fulcrum shaft 121.

In the relevant configuration, for example, in comparison with the configuration where the height of the HST trunnion shaft 12 is the same as the height of the rotation fulcrum shaft 121, the necessitated space is often smaller.

Further, the HST neutrality-returning cam 110 is, so as to get apart from the rotation fulcrum shaft 121, incliningly arranged obliquely below the HST trunnion shaft 12.

In the relevant configuration, since a redundant space for arranging the HST trunnion shaft 12 and the rotation fulcrum shaft 121 more closely to each other is generated, for example, in comparison with the configuration where the HST neutrality-returning cam 110 is arranged straight immediately under the HST trunnion shaft 12, the necessitated space is often smaller.

Hence, since link retrenchment which is related to the HST link mechanism 70 and the HST neutrality-returning mechanism 100 is accompanied by compactification of the configuration, more effective utilization of the vehicle inner part space and cost reduction are realized.
(A4) As has been described above, the supporting part 21 supports in common the HST trunnion shaft 12, and the rotation fulcrum shaft 121.

And, the supporting part 21 is a plate-shaped attachment metal-member which is a single member, and is joined to the right outer wall of the transmission case 20.

In the relevant configuration, for example, in comparison with the configuration where the HST trunnion shaft 12 is supported by a dedicated metal-member, and the rotation fulcrum shaft 121 is supported by the transmission case 20, the necessitated space is often smaller, and the necessitated number of components is also often smaller.

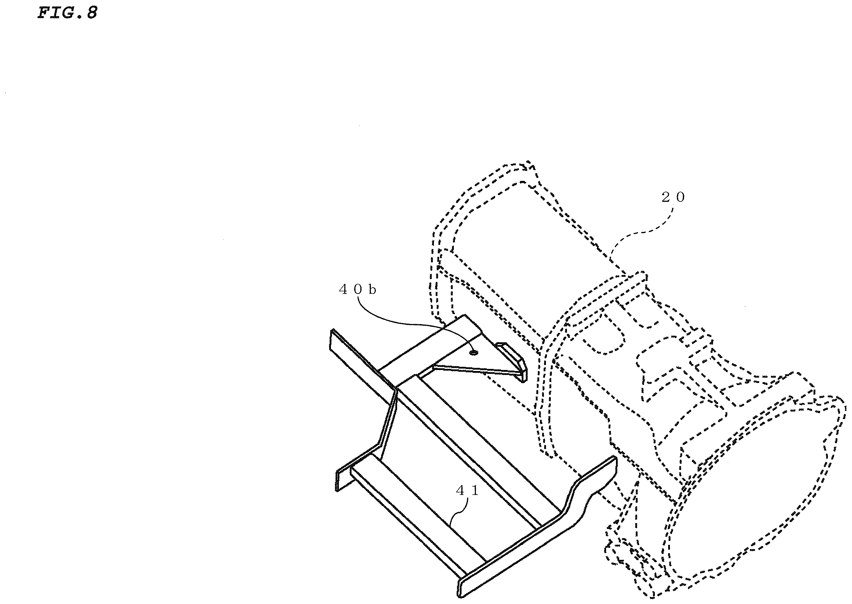

Hence, since supporting part commonization which is related to the HST link mechanism 70 and the HST neutrality-returning mechanism 100 is accompanied by compactification of the configuration, more effective utilization of the vehicle inner part space and cost reduction are realized.
(B) Mainly referring to FIGs. 6 and 8, descriptions are given in detail regarding the configuration and action which are related to the floor 40.

Here, FIG. 8 is a partial perspective view of the neighborhood of the transmission case 20 of the tractor of the embodiment in the present invention.

A floor reinforcement part 40a is a plate-shaped member, and is joined via a cushion 42 to a floor bracket 41 attached to the transmission case 20.

Pedal stopper bolts 63a and 63b are protrudingly provided to the upper face of the floor 40.

Even when a stepping-on operation of the HST pedal 60 corresponding to the frontward movement speed-increasing is strongly performed, since the lower face of the HST pedal 60 abuts against the head part of the pedal stopper bolt 63a, the HST pedal 60 does not collide against the upper face of the floor 40.

Even when a stepping-on operation of the HST pedal 60 corresponding to the rearward movement speed-increasing is strongly performed, since the lower face of the HST pedal 60 abuts against the head part of the pedal stopper bolt 63b, the HST pedal 60 does not collide against the upper face of the floor 40.

The attachment nut of the pedal stopper bolt 63b is provided in close proximity to the floor reinforcement part 40a.

In the relevant configuration, the stopper-strength of the pedal stopper bolt 63b is improved. And, as has been described above, the one end part of the link arm 71 a is joined to the end part 12a at the right side of the HST trunnion shaft 12, and the central part of the link arm 71a is joined to the link arm 71b. The front side of a damper 90 is joined to the other end part of the link arm 71a. The joining between the damper 90 and the link arm 71a is rotatably performed utilizing a pin.

In the relevant configuration, since the front side of the damper 90 is joined to the link arm 71a of the HST link mechanism 70, and a dedicated attachment member is not used because of the component intensiveness-commonization to the welding components related to the HST neutrality-returning cam 110, the necessitated number of components is smaller, and more effective utilization of the vehicle inner part space and cost reduction are realized.

Further, the rear side of the damper 90 is joined to the floor bracket 41, utilizing a damper attachment hole 40b bored in the floor bracket 41. The joining between the damper 90 and the floor bracket 41 is fixedly performed utilizing a bolt.

In the relevant configuration, since the rear side of the damper 90 is joined to the floor bracket 41, and a dedicated attachment member is not used, the necessitated number of components is smaller, and more effective utilization of the vehicle inner part space and cost reduction are realized.

A working vehicle in the present invention is such that more effective utilization of the vehicle inner part space is able to be realized, and is useful for the purpose of utilizing for a working vehicle such as a tractor or the like.

## Claims

1. A working vehicle, comprising:
a vehicle body (5);
a driving part (30);
a hydrostatic transmission (11) which has a hydrostatic transmission trunnion shaft. (12);
a hydrostatic transmission link mechanism (70) which connects a hydrostatic transmission pedal (60) to the hydrostatic transmission trunnion shaft (12);
a hydrostatic transmission neutrality-returning cam (110) fixed to the hydrostatic transmission trunnion shaft (12);
a hydrostatic transmission neutrality-returning arm member (120) which interlocks with the hydrostatic transmission neutrality-returning cam (110), and rotates around a rotation fulcrum shaft (121); and
a hydrostatic transmission neutrality-returning spring (130) which energizes the hydrostatic transmission neutrality-returning arm member (120), so that the hydrostatic transmission trunnion shaft (12) returns to a neutrality position,
the hydrostatic transmission trunnion shaft (12), and the rotation fulcrum shaft (121) are arranged immediately under the hydrostatic transmission pedal (60),
the hydrostatic transmission neutrality returning arm member (120) has a spring joining arm (122) to which the hydrostatic transmission neutrality-returning spring (130) is joined, and a bearing joining arm (123) protrudingly provided to which a cam abutting bearing (140), which is made to abut against the hydrostatic transmission neutrality-returning cam (110), is fixed,
**characterized in that**
the spring joining arm (122), a lower-end part of which is joined to the rotation fulcrum shaft (121), is upwardly provided, so that an upper-end part of the spring joining arm (1.22) is positioned above a floor (40) of the driving part (30), and
the hydrostatic transmission neutrality-returning spring (130) is arranged above the floor (40) of the driving part (30), so that a front-end part of the hydrostatic transmission neutrality-returning spring (130) is joined tο a stay attached to the vehicle-body (5) and that a rear-end part of the hydrostatic transmission neutrality-returning spring (130) is joined to the upper-end part of the spring joining arm (122).

2. The working vehicle according to claim 1, comprising a supporting part (21) which supports in common the hydrostatic transmission trunnion shaft (12), and the rotation fulcrum shaft (121), wherein
the supporting part (21) is a plate-shaped member which is a single member, and is joined to an outer wall of a transmission case (20).

3. The working vehicle according to claim 1 or 2, wherein
the hydrostatic transmission neutrality-returning cam (110), and the cam abutting bearing (140) are, compared with the hydrostatic transmission neutrality-returning arm member (120), arranged near to a center of the vehicle-body (5) with respect to a left-and-right direction.

4. The working vehicle according to claim 1 or 2, wherein
the hydrostatic transmission link mechanism (70) has plural link arms (71a, 71b, 71c), a link arm pin (72a, 72b) which joins the plural link arms (71a, 71b, 71c), and a lock-hairpin (73a, 73b) which prevents coming-off of the link arm pin (72a, 72b), and
the lock-hairpin (73a, 73 b) is, compared with the plural link arms (71a, 71b, 71c), arranged near to a center of the vehicle-body (5) with respect to a left-and-right direction.

5. The working vehicle according to any one of claims 1 to 4, wherein the rotation fulcrum shaft (12.1) is arranged immediately behind a pedal arm of a brake pedal (50).

## Patentansprüche

1. Arbeitsfahrzeug, umfassend:
eine Karosserie (5),
einen Antriebsteil (30),
ein hydrostatisches Getriebe (11), das eine Zapfenwelle (12) des hydrostatischen Getriebes aufweist,
einen Verbindungsmechanismus (70) des hydrostatischen Getriebes, der ein Pedal (60) des hydrostatischen Getriebes mit der Zapfenwelle (12) verbindet,
einen an der Zapfenwelle (12) befestigten Leerlauf-Rückstellnocken (110) des hydrostatischen Getriebes,
einen Leerlauf-Rückstellarm (120) des hydrostatischen Getriebes, der mit dem Leerlauf-Rückstellnocken (110) ineinandergreift und um eine Drehspindel (121) rotiert, und
eine Leerlauf-Rückstellfeder (130) des hydrostatischen Getriebes, die den Leerlauf-Rückstellarm (120) mit Energie versorgt, damit die Zapfenwelle (12) in eine Leerlaufstellung zurückkehrt,
wobei Zapfenwelle (12) und Drehspindel (121) unmittelbar unter dem Pedal (60) angeordnet sind,
wobei der Leerlauf-Rückstellarm (120) umfasst: einen Federverbindungsarm (122), mit dem die Leerlauf-Rückstellfeder (130) verbunden ist, und einen Lagerverbindungsarm (123), von dem ein an den Nocken angrenzendes Lager (140), der an den Leerlauf-Rückstellnocken (110) angrenzt, absteht,
**dadurch gekennzeichnet, dass**
der Federverbindungsarm (122), dessen unterer Endteil mit der Drehspindel (121) verbunden ist, nach oben vorgesehen ist, damit ein oberer Endteil des Federverbindungsarms (122) über einem Boden (40) des Antriebsteils (30) positioniert ist, und
die Leerlauf-Rückstellfeder (130) über dem Boden (40) des Antriebsteils (30) angeordnet ist, damit ein vorderer Endteil der Leerlauf-Rückstellfeder (130) mit einer mit der Karosserie (5) verbundenen Strebe verbunden ist und ein hinterer Endteil der Leerlauf-Rückstellfeder (130) mit dem oberen Endteil des Federverbindungsarms (122) verbunden ist.

2. Arbeitsfahrzeug nach Anspruch 1, umfassend ein tragendes Teil (21), das zugleich die Zapfenwelle (12) und die Drehspindel (121) trägt, wobei
das tragende Teil (21) ein plattenförmiges Element ist, das ein einzelnes Element ist und mit einer Außenwand eines Getriebegehäuses (20) verbunden ist.

3. Arbeitsfahrzeug nach Anspruch 1 oder 2, wobei:
der Leerlauf-Rückstellnocken (110) und das Lager (140) relativ zum Leerlauf-Rückstellarm (120) in der Nähe eines Mittelpunts der Karosserie (5) in Links-Rechts-Richtung angeordnet ist.

4. Arbeitsfahrzeug nach Anspruch 1 oder 2, wobei:
der Verbindungsmechanismus (70) mehrere Verbindungsarme (71a, 71b, 71c), einen Stift (72a, 72b) der Verbindungsarme, der die mehreren Verbindungsarme (71a, 71b, 71c) verbindet, und eine Verriegelungshaarnadel (73a, 73b), die ein Lösen des Stifts (72a, 72b) verhindert, und
die Verriegelungshaarnadel (73a, 73b) im Vergleich zu den mehreren Verbindungsarmen (71a, 71b, 71c) in der Nähe eines Mittelpunkts der Karosserie (5) in Links-Rechts-Richtung angeordnet ist.

5. Arbeitsfahrzeugs nach einem der Ansprüche 1 - 4, wobei die Drehspindel (121) unmittelbar hinter einem Pedalarm eines Bremspedals (50) angeordnet ist.

## Revendications

1. Véhicule utilitaire, comprenant :
un châssis de véhicule (5) ;
une partie de conduite (30) ;
une transmission hydrostatique (11) qui possède un arbre à tourillon de transmission hydrostatique (12) ;
un mécanisme de liaison de transmission hydrostatique (70) qui relie une pédale de transmission hydrostatique (60) à l'arbre à tourillon de transmission hydrostatique (12) ;
une came de retour au point mort de transmission hydrostatique (110) fixée sur l'arbre à tourillon de transmission hydrostatique (12) ;
un élément de bras de retour au point mort de transmission hydrostatique (120) qui se bloque avec la came de retour au point mort de transmission hydrostatique (110), et tourne autour d'un axe de point d'appui de rotation (121) ; et
un ressort de ressort au point mort de transmission hydrostatique (130) qui alimente l'élément de bras de retour au point mort de transmission hydrostatique (120), de sorte que l'arbre à tourillon de transmission hydrostatique (12) revienne en position neutre,
l'arbre à tourillon de transmission hydrostatique (12), et l'axe de point d'appui de rotation (121) sont disposés juste en-dessous de la pédale de transmission hydrostatique (60),
l'élément de bras de retour au point mort de transmission hydrostatique (120) possède un bras de jonction à ressort (122) auquel le ressort de retour au point mort de transmission hydrostatique (130) est joint, et un bras de jonction à roulement (123) en saillie, sur lequel un roulement de butée de came (140), qui est prévu pour buter contre la came de retour au point mort de transmission hydrostatique (110), est fixé,
**caractérisé en ce que**
le bras de jonction à ressort (122), dont une partie inférieure est jointe à l'axe d'appui de rotation (121), est prévu vers le haut, de sorte qu'une partie supérieure du bras de jonction à ressort (122) soit positionnée au-dessus d'un plancher (40) de la partie d'entraînement (30), et
le ressort de retour au point mort de transmission hydrostatique (130) est prévu au-dessus du plancher (40) de la partie d'entraînement (30), de sorte qu'une partie avant du ressort de retour au point mort de transmission hydrostatique (130) soit jointe à un renfort fixé sur le châssis du véhicule (5), et qu'une partie arrière du ressort de retour au point mort de transmission hydrostatique (130) soit jointe à la partie supérieure du bras de jonction à ressort (122).

2. Véhicule utilitaire selon la revendication 1, comprenant une partie de support (21) qui supporte en commun l'arbre à tourillon de transmission hydrostatique (12), et l'axe d'appui de rotation (121), dans lequel
la partie de support (21) est un élément en forme de plaque qui est un élément unique, et est jointe à une paroi extérieure d'un boîtier de transmission (20).

3. Véhicule utilitaire selon la revendication 1 et 2, dans lequel
la came de retour au point mort de transmission hydrostatique (110) et le roulement de butée de came (140) sont comparés avec l'élément de bras de retour au point mort de transmission hydrostatique (120), disposé près d'un centre du châssis du véhicule (5) par rapport à une direction gauche/droite.

4. Véhicule utilitaire selon la revendication 1 ou 2, dans lequel
le mécanisme de liaison de transmission hydrostatique (70) possède plusieurs bras de liaison (71a, 71b, 71c), une broche de bras de liaison (72a, 72b) qui joint les bras de liaison (71a, 71b, 71c), et une épingle à cheveux de blocage (73a, 73b) qui empêche le détachement de la broche de bras de liaison (72a, 72b), et
l'épingle à cheveux de blocage (73a, 73b) est comparée avec les bras de liaison (71a, 71b, 71c), disposés près d'un centre du châssis du véhicule (5) par rapport à une direction gauche/droite.

5. Véhicule utilitaire selon l'une quelconque des revendications 1 à 4, dans lequel l'axe d'appui de rotation (121) est disposé juste derrière un bras de pédale d'une pédale de frein (50) .
